# EUROPÄISCHE PATENTSCHRIFT

(11) **EP 2 754 533 B1**
(45) Veröffentlichungstag und Bekanntmachung des Hinweises auf die Patenterteilung: **13.04.2016**
(21) Anmeldenummer: 13196577.4
(22) Anmeldetag: 11.12.2013
(51) Int. Cl.: B23Q 11/10, B23B 31/02

(54) **Werkzeughalter sowie Werkzeuganordnung mit einem Werkzeughalter und einem Bearbeitungswerkzeug**
Tool holder and tool assembly with a tool holder and a tool
Porte-outils et outillage doté d'un porte-outils et d'un outil d'usinage

(30) Priorität: 14.01.2013 DE 202013100177 U
(43) Veröffentlichungstag der Anmeldung: 16.07.2014
(73) Patentinhaber: Bilz Werkzeugfabrik GmbH & Co. KG, 73760 Ostfildern (DE)
(72) Erfinder: Schneider, Werner, 73776 Altbach (DE)
(74) Vertreter: Witte, Weller & Partner Patentanwälte mbB

(56) Entgegenhaltungen:
- EP-A1- 2 412 463
- DE-U1- 9 305 704
- GB-A- 2 140 334

## Beschreibung

Die vorliegende Erfindung betrifft einen Werkzeughalter, insbesondere einen Steilkegelschaft, mit zumindest einer Aufnahmefläche, insbesondere einem Aufnahmekonus, zur Aufnahme und Mitnahme durch eine Antriebsspindel, und mit zumindest zwei integrierten Fluidpfaden für ein Betriebsfluid, wobei den Fluidpfaden zumindest ein Sperrorgan zugeordnet ist, das dazu ausgebildet ist, den Fluidpfad richtungsabhängig zu sperren oder freizugeben. Die Erfindung betrifft ferner eine Werkzeuganordnung mit einem derartigen Werkzeughalter sowie einem Bearbeitungswerkzeug, das an dem Werkzeughalter aufgenommen ist.

Ein Werkzeughalter gemäß der eingangs genannten Art ist aus der EP 2 412 463 A1 bekannt. Hierbei kann zusätzlich zu einem zentralen Fluidpfad, der mit einem Ventil versehen ist, zusätzlich ein externer Fluidpfad vorgesehen sein, der mit dem zentralen Fluidpfad zusammenwirkt.

Werkzeughalter allgemeiner Art sind im Stand der Technik hinreichend bekannt. Werkzeughalter können etwa auch als Spannfutter oder, allgemeiner, als Futter bezeichnet werden. Werkzeughalter sind üblicherweise dazu ausgebildet, ein Bearbeitungswerkzeug aufzunehmen, etwa ein Werkzeug zur spanenden Bearbeitung, beispielsweise ein Bohrwerkzeug, Drehwerkzeug oder ein Fräswerkzeug. Die Werkzeughalter können ferner eine definierte Aufnahmekontur, insbesondere zumindest eine Aufnahmefläche aufweisen, um beispielsweise an einer Antriebsspindel aufgenommen und festgelegt zu werden. Somit kann das Bearbeitungswerkzeug mittelbar unter Hinzunahme des Werkzeughalters an der Antriebsspindel befestigt werden. Werkzeughalter können einen Werkzeugwechselvorgang vereinfachen. Dies kann sich vorteilhaft etwa bei Bearbeitungsmaschinen auswirken, die Magazine mit einer Mehrzahl von Bearbeitungswerkzeugen aufweisen. Es ist eine Vielzahl von Bearbeitungsprozessen denkbar, bei denen bei einer Bearbeitung eines Werkstücks auf eine Mehrzahl verschiedener Bearbeitungswerkzeuge zurückgegriffen werden muss. Werkzeughalter können eine geeignete definierte Anschlusskontur aufweisen, so dass sich insbesondere automatisierte Werkzeugwechselvorgänge vereinfachen lassen.

Darüber hinaus können Werkzeughalter dazu ausgestaltet sein, neben dem bloßen Spannen und/oder Aufnehmen des Bearbeitungswerkzeugs weitere Funktionalitäten bereitzustellen. Hiervon kann etwa eine Zuführung eines Betriebsfluids umfasst sein. Unter einem Betriebsfluid kann allgemein ein Fluid verstanden werden, das zumindest zum Zwecke der Schmierung oder der Kühlung einem aufgenommenen Bearbeitungswerkzeug zugeführt wird. üblicherweise können derartige Betriebsfluide sowohl zum Kühlen als auch zum Schmieren verwendet werden. Der Begriff Fluid kann sowohl Flüssigkeiten (etwa Emulsionen) als auch Gase ohne oder auch mit gelösten feinen flüssigen oder festen Partikeln (etwa Aerosole) umfassen.

Im Stand der Technik sind Bearbeitungsmaschinen mit Spindelantrieben zum Antrieb einer Antriebsspindel bekannt, die verschiedene Konfigurationen aufweisen. Diese können sich insbesondere im Hinblick auf eine Orientierung und Positionierung von Zuführleitungen für das Betriebsfluid unterscheiden.

Es ist grundsätzlich vorstellbar, einen Werkzeughalter derart zu gestalten, dass ein integrierter Fluidpfad oder eine Mehrzahl von integrierten Fluidpfaden vorgesehen ist, um verschiedene der vorgenannten Konfigurationen abdecken zu können. Mit anderen Worten kann ein Werkzeughalter einen oder eine Mehrzahl von (Zuführ-)Anschlüssen für das Betriebsfluid aufweisen. Üblicherweise werden jedoch nicht sämtliche vorhandenen Fluidpfade des Werkzeughalters benötigt. Beispielhaft kann eine Bearbeitungsmaschine mit einer Antriebsspindel derart konfiguriert sein, dass lediglich ein einziger Fluidpfad des Werkzeughalters koppelbar ist. Somit kann es erforderlich sein, den übrigen Fluidpfad oder die übrigen Fluidpfade sicher zu verschließen, um einen unerwünschten Austritt des Betriebsfluids sicher zu verhindern. Ein solcher unerwünschter Austritt kann etwa einen Austritt des Betriebsfluids über einen Einlass eines nicht angekoppelten Fluidpfads umfassen.

Im Stand der Technik ist es bekannt, nicht genutzte Fluidpfade, insbesondere deren Einlassöffnungen, manuell zu verschließen. Hierbei kommen etwa Pfropfen, Verschlussschrauben, Dichtmittel oder Ähnliches zur Verwendung.

Soll ein derartiger Werkzeughalter, bei dem zumindest eine Teilmenge der Fluidpfade manuell verschlossen ist, an einer Arbeitsmaschine mit einer abweichenden Konfiguration (hinsichtlich der Zuführleitungen für das Betriebsfluid) verwendet werden, sind aufwendige manuelle Eingriffe unabdingbar. So muss beispielsweise ein Werker verschlossene Fluidpfade (bzw. deren Einlassöffnungen) öffnen und ggf. reinigen. Ferner kann es erforderlich sein, ehemals geöffnete Fluidpfade (bzw. deren Einlassöffnungen) zu verschließen. Ein solches manuelles Umrüsten kann grundsätzlich fehlerbehaftet sein. Es besteht insbesondere bei einem unerfahrenen Werker die Gefahr, dass der Werkzeughalter nicht hinreichend an die Konfiguration der Bearbeitungsmaschine mit der Antriebsspindel angepasst ist. Es drohen einerseits eine mangelhafte Kühlung bzw. eine mangelhafte Schmierung des Bearbeitungswerkzeugs sowie des zu bearbeitenden Werkstücks. Andererseits besteht die Gefahr, dass das Betriebsfluid unkontrolliert aus dem Werkzeughalter austritt und die Bearbeitungsmaschine und/oder das Werkstück verschmutzt oder gar beschädigt.

Vor diesem Hintergrund liegt der Erfindung die Aufgabe zugrunde, einen Werkzeughalter anzugeben, der eine Mehrzahl von Konfigurationen zur Zuführung eines Betriebsfluids aufweist und einen möglichst fehlerarmen oder fehlerfreien Wechsel zwischen den Konfigurationen ermöglichen soll. Insbesondere soll ein manueller Eingriff durch einen Werker möglichst vereinfacht oder gar gänzlich vermieden werden können.

Diese Aufgabe wird erfindungsgemäß durch Werkzeughaltergemäß Anspruch 1 gelöst.

Die Aufgabe der Erfindung wird auf diese Weise vollkommen gelöst.

Erfindungsgemäß kann nämlich der Umstand ausgenutzt werden, dass das Betriebsfluid im Fehlerfalle durch einen (ggf. unverschlossenen) Fluidpfad entgegen einer Soll-Zuführrichtung auslaufen bzw. austreten würde. Somit kann das zumindest eine Sperrorgan in jedem Fluidpfad derart gestaltet und angeordnet werden, dass es in der Soll-Zuführrichtung für das Betriebsfluid durchlässig ist und entgegen der Soll-Zuführrichtung für das Betriebsfluid undurchlässig ist.

Mit anderen Worten kann es sich bei dem Fluidpfad um einen selektiv aktivierbaren Fluidpfad handeln. Die Aktivierung des Fluidpfades oder der Fluidpfade kann automatisiert, insbesondere ohne menschlichen Eingriff, durch das Sperrorgan erfolgen.

Unter einem Fluidpfad ist ein Pfad für das Betriebsfluid zu verstehen, der üblicherweise einen Einlass und einen Auslass aufweist, wobei zwischen dem Einlass und dem Auslass zumindest ein Strömungskanal vorgesehen ist, der durch Wandungen von einer Umgebung abgegrenzt ist. Der Fluidpfad weist regelmäßig eine Soll-Zuführrichtung bzw. eine Soll-Durchlaufrichtung auf.

Gemäß einer weiteren Ausgestaltung weist der Werkzeughalter zumindest zwei integrierte Fluidpfade für das Betriebsfluid auf, wobei das zumindest eine Sperrorgan dazu ausgebildet ist, zumindest einen der Fluidpfade richtungsabhängig zu sperren oder freizugeben.

Erfindungsgemäß ist das zumindest eine Sperrorgan dazu ausgebildet, den zumindest einen Fluidpfad druckabhängig zu sperren oder freizugeben.

Mit anderen Worten kann das zumindest eine Sperrorgan etwa auf Basis einer Druckdifferenz zwischen zwei Seiten, die durch das zumindest eine Sperrorgan getrennt sind, geschaltet werden.

In bevorzugter Weiterbildung sind die zumindest zwei Fluidpfade zur Leitung desselben Betriebsfluids ausgebildet, wobei es sich bei dem Betriebsfluid zumindest um ein Kühlmittel oder ein Schmiermittel handelt. Bei dem Betriebsfluid kann es sich insbesondere um ein Betriebsfluid handeln, das sowohl zur Kühlung als auch zum Schmieren einsetzbar ist. In diesem Zusammenhang ist anzumerken, dass es sich bei dem Betriebsfluid insbesondere nicht um ein Spannfluid handeln muss. Es sind Werkzeughalter bekannt, die hydraulische Spanneinrichtungen zum Spannen eines Bearbeitungswerkzeugs aufweisen. Die Auslegung und Gestaltung derartiger Spanneinrichtungen unterliegt jedoch anderen Anforderungen und Randbedingungen als die Gestaltung eines Systems zum Zuführen eines als Kühlmittel oder Schmiermittel nutzbaren Betriebsfluids, das insbesondere aufgrund einer Mehrzahl integrierter Fluidpfade verschiedene Konfigurationen aufweisen kann.

Erfindungsgemäß ist jedem Fluidpfad zumindest ein Sperrorgan zugeordnet. Auf diese Weise kann der Werkzeughalter eine Vielzahl von Fluidpfad-Konfigurationen einnehmen, ohne dass es manueller Anpassungen beim Umrüsten bedarf.

In zweckmäßiger Weiterbildung weist das zumindest eine Sperrorgan eine definierte Durchlassrichtung und eine definierte Sperrrichtung auf. Üblicherweise entspricht die Durchlassrichtung der Soll-Durchlaufrichtung des Betriebsfluids entlang des jeweiligen Fluidpfads. Die Spenrichtung ist üblicherweise zu dieser entgegengerichtet.

Gemäß einer weiteren Ausgestaltung sind die zumindest zwei Fluidpfade mittelbar oder unmittelbar miteinander verbunden. Mit anderen Worten können die zumindest zwei Fluidpfade etwa im Werkzeughalter aufeinandertreffen. Dies kann mittelbar oder unmittelbar erfolgen. Ein mittelbares Aufeinandertreffen kann etwa indirekt unter Hinzunahme weiterer Teile des Werkzeughalters und/oder des Bearbeitungswerkzeugs erfolgen. Eine unmittelbare Verbindung kann etwa dann auftreten, wenn jeweilige Strömungskanäle der Fluidpfade einander kreuzen oder ineinander münden. Aufgrund der mittelbaren oder unmittelbaren Verbindung der zumindest zwei Fluidpfade würde sich grundsätzlich die Gefahr eines unerwünschten Austritts des Betriebsfluids erhöhen. Da jedoch das zumindest eine Sperrorgan in zumindest einem der Fluidpfade angeordnet ist, kann ein Durchtritt des Betriebsfluids entgegen der Soll-Durchlaufrichtung verhindert werden.

Erfindungsgemäß ist ferner das zumindest eine Sperrorgan durch den Druck des Betriebsfluids steuerbar. Somit kann das Betriebsfluid selbst eine Stellgröße für das zumindest eine Sperrorgan bereitstellen, das als Stellglied fungiert. Es versteht sich, dass das Sperrorgan dazu ausgestaltet sein kann, durch eine Druckdifferenz aktiviert oder deaktiviert zu werden. Die Druckdifferenz kann beispielsweise eine Druckdifferenz zwischen einem Atmosphärendruck und einem Druck des Betriebsfluids umfassen. Das Betriebsfluid wird üblicherweise dem Werkzeughalter bzw. dem Bearbeitungswerkzeug mit einem Druck zugeführt, der deutlich über dem Atmosphärendruck liegt. Auf diese Weise kann beim Sperrorgan eine eindeutig detektierbare Stellgröße anliegen und ausgenutzt werden.

In vorteilhafter Weiterbildung ist das zumindest eine Sperrorgan als Rückschlagventil ausgestaltet. Unter einem Rückschlagventil kann üblicherweise ein Bauteil verstanden werden, das die Strömung eines Fluids nur in einer (Durchlass-)Richtung zulässt. Es gibt verschiedene Bauarten von Rückschlagventilen. Rückschlagventile können etwa als Klappenventile, Kugelventile, Kegelventile, Stößelventile, Tellerventile und in ähnlicher Weise ausgestaltet sein.

Das als Rückschlagventil ausgestaltete zumindest eine Sperrorgan kann ein Sperrelement und eine Gegenkontur aufweisen, die mit dem Sperrelement korrespondiert. Bei dem Sperrelement kann es sich etwa um eine Klappe, eine Kugel, einen Konus, einen Teller, einen Stößel oder Ähnliches handeln. Das Sperrelement und die Gegenkontur können einander unter Ausbildung einer Linienberührung oder einer Flächenberührung kontaktieren. Vorzugsweise ist die Gegenkontur an die Kontur des Sperrelements angepasst. Zwischen dem Sperrelement und der Gegenkontur kann eine Dichtfläche vorgesehen sein. Das Sperrelement ist üblicherweise beweglich aufgenommen, um selektiv zwischen einer Sperrstellung und einer Durchlassstellung verlagert zu werden. In der Sperrstellung liegt das Sperrelement dichtend an der Gegenkontur an. In der Durchlassstellung ist das Sperrelement üblicherweise zumindest teilweise von der Gegenkontur gelöst, um einen Durchfluss durch eine Öffnung in der Gegenkontur zu erlauben.

In zweckmäßiger Weiterbildung weist das zumindest eine Sperrorgan ein Spannelement auf, das das Sperrelement in Richtung auf eine Spannstellung beaufschlagt. Auf diese Weise kann die Funktionssicherheit des zumindest einen Sperrorgans, insbesondere des Rückschlagventils, erhöht werden. In der Spannstellung liegt das Sperrelement dichtend an der Gegenkontur an. Das Spannelement kann etwa als Spannfeder ausgestaltet sein. Das Spannelement kann als mechanische Feder, ferner jedoch etwa auch als fluidische Feder gestaltet sein. Das Spannelement kann das Sperrelement mit einer Haltekraft in Richtung auf die Spannstellung beaufschlagen, die einen Mindestdruck bzw. eine Mindestdruckdifferenz definiert. Erst dann, wenn ein entlang der Durchlassrichtung einströmendes Betriebsfluid einen Druck aufweist, der die Haltekraft bzw. den Mindestdruck überwindet, kann das Sperrelement in Richtung auf eine Durchlassstellung verlagert werden. In der Durchlassstellung ist das Sperrelement relativ zur Gegenkontur verlagert, um einen Durchlass zu erlauben.

In zweckmäßiger Ausgestaltung weist jeder Fluidpfad des Werkzeughalters zumindest einen Strömungskanal auf, der in den Werkzeughalter eingebracht ist und der zumindest eine Einlassöffnung oder eine Auslassöffnung für das Betriebsfluid aufweist. Insbesondere kann der Werkzeughalter einen einstückigen Grundkörper aufweisen, in den der zumindest eine Strömungskanal jedes Fluidpfads etwa als Bohrung eingebracht ist.

Gemäß einer weiteren Ausgestaltung weist ein erster Fluidpfad zumindest einen zentralen Strömungskanal auf, der insbesondere koaxial zu einer Längsachse des Werkzeughalters verläuft Mit anderen Worten kann es sich dabei um einen mittigen Strömungskanal handeln, der den Werkzeughalter etwa ausgehend von einer rückwärtigen Seite, die der Antriebsspindel zugewandt ist, hin zu einer Vorderseite, die einem Bearbeitungswerkzeug bzw. einer Aufnahme für ein Bearbeitungswerkzeug zugewandt ist, durchragen. Es versteht sich, dass der Fluidpfad eine Mehrzahl aneinander gereihter oder parallel geschalteter Strömungskanäle aufweisen kann.

Die rückwärtige Seite des Werkzeughalters kann auch als Spindelseite bezeichnet werden. Die Vorderseite des Werkzeughalters kann auch als Werkzeugseite bezeichnet werden.

Gemäß einer weiteren Ausgestaltung weist ein zweiter Fluidpfad zumindest einen seitlichen Strömungskanal auf, der unter einem Winkel, insbesondere unter einem spitzen Winkel, zu einer Längsachse des Werkzeughalters verläuft. Ferner ist es vorstellbar, den zweiten Fluidpfad mit zumindest zwei seitlichen Strömungskanälen zu versehen, die jeweils unter einem spitzen Winkel zu einer Längsachse des Werkzeughalters verlaufen, wobei die jeweiligen spitzen Winkel entgegengesetzte Öffnungsrichtungen aufweisen.

Gemäß einer beispielhaften Ausgestaltung kann ein erster Strömungskanal des zweiten Fluidpfads einen spitzen Winkel aufweisen, der in Richtung der Spindelseite geöffnet ist, wobei ein zweiter Strömungskanal des zweiten Fluidpfads einen spitzen Winkel zur Längsachse aufweisen kann, der in Richtung der Werkzeugseite geöffnet ist.

In zweckmäßiger Weiterbildung weist der Werkzeughalter ferner einen Bund auf, wobei zumindest einer der Fluidpfade einen Strömungskanal aufweist, der an einer Axialfläche des Bunds mündet. Der Bund kann als zumindest teilweise radial nach außen vorspringende Kontur am Werkzeughalter vorgesehen sein. Vorzugsweise ist der Bund zumindest teilweise rotationssymmetrisch ausgestaltet. Der Bund kann etwa als sog. Greiferbund ausgestaltet sein, um eine definierte Aufnahme des Werkzeughalters mit Greifwerkzeugen zu erlauben. Auf diese Weise kann eine automatisierte Verlagerung des Werkzeughalters durch Bereitstellung einer definierten Greifkontur vereinfacht werden.

Insbesondere der zweite Fluidpfad, der zumindest einen seitlichen Strömungskanal aufweist, kann derart gestaltet sein, dass der seitliche Strömungskanal an der Axialfläche des Bunds mündet. Hierzu kann der Strömungskanal unter einem Winkel zur Längsachse des Werkzeughalters verlaufen, der in Richtung auf die Spindelseite geöffnet ist. Mit anderen Worten kann der Strömungskanal an der spindelseitigen Axialfläche des Bunds münden.

Zweckmäßigerweise weist der Werkzeughalter zumindest eine Werkzeugaufnahmefläche zur Aufnahme eines Bearbeitungswerkzeugs auf, insbesondere eine Aufnahmetasche. An der Werkzeugaufnahmefläche, insbesondere in der Aufnahmetasche, kann das Bearbeitungswerkzeug fest und wiederholgenau aufgenommen werden. Der Werkzeughalter kann ferner dazu ausgestaltet sein, das Bearbeitungswerkzeug kraftschlüssig und/oder formschlüssig zu sichern. Hierzu können beim Werkzeughalter geeignete Spannmittel vorgesehen sein.

Gemäß einer Weiterbildung dieser Ausgestaltung münden die zumindest zwei integrierten Fluidpfade zumindest mittelbar oder unmittelbar in die Aufnahmetasche, um das Betriebsfluid an das Bearbeitungswerkzeug zu übergeben. Beispielhaft kann auch im Bearbeitungswerkzeug zumindest ein Fluidpfad ausgebildet sein, der (im montierten Zustand) in die Aufnahmetasche des Werkzeughalters mündet.

Die Aufgabe der Erfindung wird ferner gelöst durch eine Werkzeuganordnung, aufweisend einen Werkzeughalter nach einem der vorgenannten Aspekte und ein Bearbeitungswerkzeug, wobei der Werkzeughalter zumindest einen selektiv aktivierbaren Fluidpfad für ein Betriebsfluid bereitstellt, das dem Bearbeitungswerkzeug über eine Spindel zuführbar ist.

Auch auf diese Weise wird die Aufgabe der Erfindung vollkommen gelöst.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine vereinfachte geschnittene seitliche Teildarstellung einer Werkzeuganordnung mit einem Werkzeughalter, der an einer Antriebsspindel aufnehmbar ist und zur Aufnahme eines Bearbeitungswerkzeugs ausgebildet ist; und
- Fig. 2a bis 2d: stark vereinfachte schematische Ansichten von Sperrorganen, die etwa bei dem in Fig. 1 gezeigten Werkzeughalter verwendbar sind.

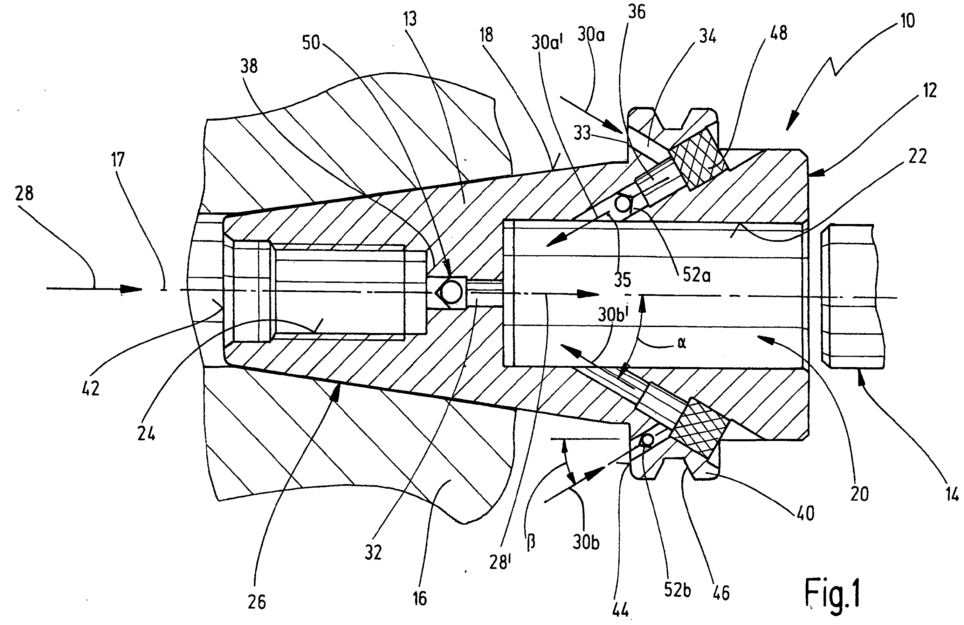

Fig. 1 zeigt eine geschnittene seitliche Teildarstellung einer Werkzeuganordnung, die insgesamt mit 10 bezeichnet ist.

Die Werkzeuganordnung 10 weist einen Werkzeughalter 12 auf, der zur Aufnahme eines Bearbeitungswerkzeugs 14 ausgebildet sein kann. In Fig. 1 ist aus Veranschaulichungsgründen lediglich ein Schaft des Bearbeitungswerkzeugs 14 in gebrochener Teildarstellung angedeutet. Bei dem Bearbeitungswerkzeug 14 kann es sich etwa um ein Werkzeug zur spanenden Bearbeitung handeln. Es versteht sich, dass auch andere Arten von Bearbeitungswerkzeugen 14 verwendbar sind. Spanende Werkzeuge können etwa Bohrwerkzeuge, Fräswerkzeuge, Drehwerkzeuge oder Ähnliches umfassen.

Der Werkzeughalter 12 ist ferner dazu ausgebildet, mit einer Antriebsspindel 16 gekoppelt zu werden, die in Fig. 1 ebenso aus Veranschaulichungsgründen lediglich vereinfacht in einer geschnittenen Teildarstellung gezeigt ist. Die Antriebsspindel 16 kann dazu ausgestaltet sein, den Werkzeughalter 12 mitsamt dem ggf. daran aufgenommenen Bearbeitungswerkzeug 14 um eine Längsachse 17 anzutreiben, insbesondere rotatorisch anzutreiben. Der Werkzeughalter 12 kann einen Grundkörper 13 aufweisen, an dem etwa eine Aufnahmefläche 18 ausgebildet ist. Gemäß einer beispielhaften Ausgestaltung kann es sich bei der Aufnahmefläche 18 um eine konische Aufnahmefläche 18 handeln. Die Aufnahmefläche 18 kann Bestandteil eines Aufnahmekonus 26 sein.

Die Aufnahmefläche 18 kann beispielhaft als Steilkegel ausgebildet sein. Insgesamt kann der Werkzeughalter 12 einen Steilkegelschaft aufweisen. Beispielhafte Ausgestaltungen können einen Steilkegelschaft aufweisen, der etwa nach DIN 69871 bzw. nach ISO 7388 genormt sein kann. Es versteht sich, dass der Werkzeughalter 12 alternativ etwa auch einen anderen Kegel aufweisen kann, beispielsweise einen Hohlschaftkegel. Ferner kann die Aufnahmefläche 18 auch eine Gestalt aufweisen, die von einer Kegelform oder einer Kegelstumpfform abweicht. Am Grundkörper 13 des Werkzeughalters 12 kann ferner eine Aufnahmetasche 20 ausgebildet sein, die beispielsweise zumindest eine Werkzeugaufnahmefläche 22 aufweist.

Die Aufnahmetasche 20 kann einen Sitz für das aufzunehmende Bearbeitungswerkzeug 14 bereitstellen. Die Aufnahmetasche 20 kann grundsätzlich eine rotationssymmetrische Form aufweisen. Die Aufnahmetasche 20 kann jedoch etwa auch eine zylindrische Form oder eine konische bzw. kegelförmige Gestaltung aufweisen. Andere Gestaltungen sind denkbar. Die Aufnahmetasche 20 kann auch eine Gestaltung aufweisen, die nicht rotationssymmetrisch ist. Anstelle der Aufnahmetasche 20, die durch eine Ausnehmung im Grundkörper 13 verwirklicht ist, kann der Werkzeughalter 12 alternativ auch eine Aufnahme für ein Bearbeitungswerkzeug aufweisen, die etwa als Vorsprung am Grundkörper 13 ausgebildet ist.

Es sind grundsätzlich auch Ausgestaltungen denkbar, bei denen der Werkzeughalter 12 und das Bearbeitungswerkzeug 14 als integriertes Bauteil ausgeführt sind. Mit anderen Worten kann der Werkzeughalter 12 auch Bestandteil des Bearbeitungswerkzeugs 14 sein und umgekehrt. Im Rahmen der nachfolgenden Beschreibung soll jedoch davon ausgegangen werden, dass der Werkzeughalter 12 sowie das Bearbeitungswerkzeug 14 als separate Bauteile ausgeführt sind. Dies soll jedoch nicht in einem einschränkenden Sinne verstanden werden.

Die Aufnahmetasche 20 ist an einem werkzeugseitigen Ende des Werkzeughalters 12 ausgebildet, das nachfolgend auch als Werkzeugseite bezeichnet wird. An seinem dem werkzeugseitigen Ende abgewandten Ende weist der Werkzeughalter 12 ein spindelseitiges Ende auf, das auch als Spindelseite bezeichnet werden kann. An der Spindelseite des Werkzeughalters 12 kann bei einer beispielhaften Ausgestaltung eine Befestigungsausnehmung 24 in den Grundkörper 13 eingebracht sein.

Der beispielhaft in Fig. 1 gezeigte Werkzeughalter 12 weist eine Mehrzahl von Fluidpfaden auf. Ein erster Fluidpfad ist durch mit 28 und 28' bezeichnete Pfeile veranschaulicht. Der Werkzeughalter 12 weist zumindest einen weiteren Fluidpfad auf. Beispielhaft ist am Werkzeughalter 12 zumindest ein zweiter Fluidpfad vorgesehen, der durch mit 30a und 30a' bezeichnete Pfeile veranschaulicht wird. Am Werkzeughalter 12 ist ein weiterer Fluidpfad vorgesehen, der durch mit 30b, 30b' bezeichnete Pfeile veranschaulicht wird. Grundsätzlich können sowohl der Pfad 30a, 30a' als auch der Pfad 30b, 30b' als zweiter Fluidpfad 30 aufgefasst werden. Die Pfade 30a, 30a' und 30b, 30b' können den zweiten Fluidpfad 30 jedoch auch gemeinsam in Kombination bilden. Der erste Fluidpfad 28, 28' verläuft im Wesentlichen koaxial zur Längsachse 17. Der Fluidpfad 30a, 30a' und der Fluidpfad 30b, 30b', die gemeinsam als zweiter Fluidpfad 30 fungieren, verlaufen zumindest abschnittsweise schräg bzw. unter einem Winkel zur Längsachse 17.

Die Richtung der Pfeile 28, 28' bzw. 30a, 30a' sowie 30b, 30b' kennzeichnet jeweils eine Soll-Durchströmrichtung bzw. eine Soll-Durchlassrichtung für ein Betriebsfluid, das dem Werkzeughalter 12 mittelbar oder unmittelbar über die Antriebsspindel 16 zuführbar ist. Der Werkzeughalter 12 ist dazu ausgebildet, das Betriebsfluid, etwa ein Kühl- und/oder Schmiermittel, dem Bearbeitungswerkzeug 14 zuzuleiten. Die Durchleitung des Betriebsfluids kann selektiv über einen der Fluidpfade 28, 30 erfolgen. Aus Veranschaulichungsgründen sollen nachfolgend die in Fig. 1 gezeigten Pfade 30a, 30a' sowie 30b, 30b' gemeinsam als Fluidpfad 30 aufgefasst werden.

Der Fluidpfad 28 durchdringt den Grundkörper 13 des Werkzeughalters 12 axial und weist zumindest einen Strömungskanal 32 auf. Der zumindest eine Strömungskanal 32 kann etwa als Axialbohrung ausgeführt sein. Der erste Fluidpfad 28 kann eine Einlassöffnung aufweisen, die an einem mit 42 bezeichneten spindelseitigen Ende des Werkzeughalters 12 vorgesehen ist. Der erste Fluidpfad 28 kann in die Aufnahmetasche 20 münden. Der erste Fluidpfad 28 kann einen Zentralbereich 38 des Grundkörpers 13 durchragen.

Der zweite Fluidpfad 30 kann einen oder mehrere Teilpfade 30a, 30b umfassen. Der zweite Fluidpfad 30 kann seitliche Strömungskanäle umfassen, die schräg unter einem Winkel zur Längsachse 17 verlaufen. Beispielhaft weist der (Teil-)Pfad 30a, 30a' einen Strömungskanal 34 auf, der unter einem Winkel β zur Längsachse 17 verläuft, wobei der Winkel β in Richtung der Spindelseite geöffnet ist. Ferner kann der (Teil-)Pfad 30a, 30a' einen Strömungskanal 36 aufweisen, der unter einem Winkel α schräg zur Längsachse 17 verläuft, wobei der Winkel α in Richtung auf die Werkzeugseite geöffnet ist. In Fig. 1 sind die Winkel α, β aus Veranschaulichungsgründen beim korrespondierenden (Teil-)Pfad 30b, 30b' abgebildet.

Jeder der Fluidpfade 28, 30 kann zumindest eine Einlassöffnung 33 und eine Auslassöffnung 35 aufweisen. Beispielhaft ist beim (Teil-)Pfad 30a, 30a' die Einlassöffnung mit 33 bezeichnet, wobei die Auslassöffnung mit 35 bezeichnet ist. Die Begriffe Einlass und Auslass korrespondieren mit den Soll-Strömungsrichtungen der Fluidpfade 28,30.

Der Strömungskanal 34, der insbesondere mit der Einlassöffnung 33 versehen ist, durchragt einen Bund 40, der am Grundkörper 13 des Werkzeughalters 12 ausgebildet ist. Die Einlassöffnung 33 mündet an einer Axialfläche 44, die der Spindelseite zugewandt ist und auch als Axialanschlag bezeichnet werden kann. Der zweite Fluidpfad 30 weist gekrümmte oder gezackte (Teil-)Pfade 30a, 30a' bzw. 30b, 30b' auf. Aus fertigungstechnischen Gründen kann etwa der weitere Strömungskanal 36 als Durchgangsbohrung ausgestaltet sein, wobei ein umfangsseitiges Ende des Strömungskanals 36 durch einen Stopfen 48 verschließbar ist Bei dem Stopfen 48 kann es sich etwa um einen Pfropfen, eine Verschlussschraube oder Ähnliches handeln. Die Auslassöffnung 35 des Strömungskanals 36 kann in die Aufnahmetasche 20 münden.

Der Bund 40 kann ferner eine sog. Greiferrille 46 aufweisen, die etwa umfangsseitig an diesem ausgebildet ist. Die Greiferrille 46 kann eine definierte Kontur bereitstellen, um ein automatisiertes Greifen und Wechseln des Werkzeughalters 12 zu vereinfachen.

Die Antriebsspindel 16 kann eine definierte Konfiguration aufweisen, um das Betriebsfluid dem Werkzeughalter 12 bereitzustellen. Hierbei kann es sich etwa um eine sog. zentrale Kühlmittelzuführung handeln. Eine zentrale Kühlmittelzuführung kann eine Zuführung des Kühlmittels durch eine Durchgangsbohrung eines Anzugsbolzens umfassen, der in die Befestigungsausnehmung 24 einführbar ist. Eine solche Konfiguration kann als AD-Konfiguration bezeichnet werden. Eine weitere alternative Konfiguration kann eine seitliche Kühlmittelzuführung umfassen. Diese kann insbesondere über den Bund 40 erfolgen. Es kann sich dabei um eine sog. B-Konfiguration handeln. Der Werkzeughalter 12 kann sowohl gemäß der AD-Konfiguration als auch gemäß der B-Konfiguration mit dem Kühlmittel (oder Schmiermittel) versorgt werden. Es versteht sich, dass weitere Ausgestaltungen andere Kühlmittelzufuhrkonfigurationen aufweisen können. Die genannten Konfigurationen sind daher lediglich als beispielhafte Gestaltungen zu betrachten.

Es besteht dabei jedoch im Betrieb grundsätzlich die Gefahr, dass das zugeführte Betriebsfluid über dem gerade nicht genutzten Fluidpfad 28, 30 nach außen austritt. Zur Vermeidung dieses nachteiligen Effekts sind beim Werkzeughalter 12 Sperrorgane 50, 52 vorgesehen, die in Fig. 1 lediglich symbolhaft vereinfacht dargestellt sind. Die Sperrorgane 50, 52 erlauben einen richtungsselektiven Durchtritt des Betriebsfluids. Der erste Fluidpfad 28 ist mit dem Sperrorgan 50 versehen. Im zweiten Fluidpfad 30 sind die Sperrorgane 52a (im Teilpfad 30a, 30a') und 52b (im Teilpfad 30b, 30b') vorgesehen. Die in Fig. 1 gezeigten Lagen der Sperrorgane 50, 52 sind als lediglich beispielhafte Ausführungsbeispiele zu verstehen. Eine tatsächliche Lage der Sperrorgane 50, 52 im jeweiligen Fluidpfad 28, 30 kann hiervon abweichen. So ist beispielhaft beim Teilpfad 30a, 30a' das Sperrorgan 52a beim (inneren) Strömungskanal 36 vorgesehen. Hingegen ist beim Teilpfad 30b, 30b' das Sperrorgan 52b im äußeren Strömungskanal vorgesehen, der dem Strömungskanal 34 im Teilpfad 30a, 30a' entspricht.

Die Sperrorgane 50, 52 sind dazu ausgestaltet, ein Durchströmen des Betriebsfluids entgegen der durch den jeweiligen Fluidpfad 28, 30 vorgegebenen Soll-Strömungsrichtung bzw. Soll-Durchlaufrichtung zu verhindern.

Vorzugsweise geschieht ein Sperren oder Freigeben des Durchflusses bei dem Sperrorgan 50, 52 automatisiert und ohne Bedienereingriff. Zu diesem Zweck können die Sperrorgane 50, 52 etwa als Rückschlagventil oder in ähnlicher Weise ausgestaltet sein.

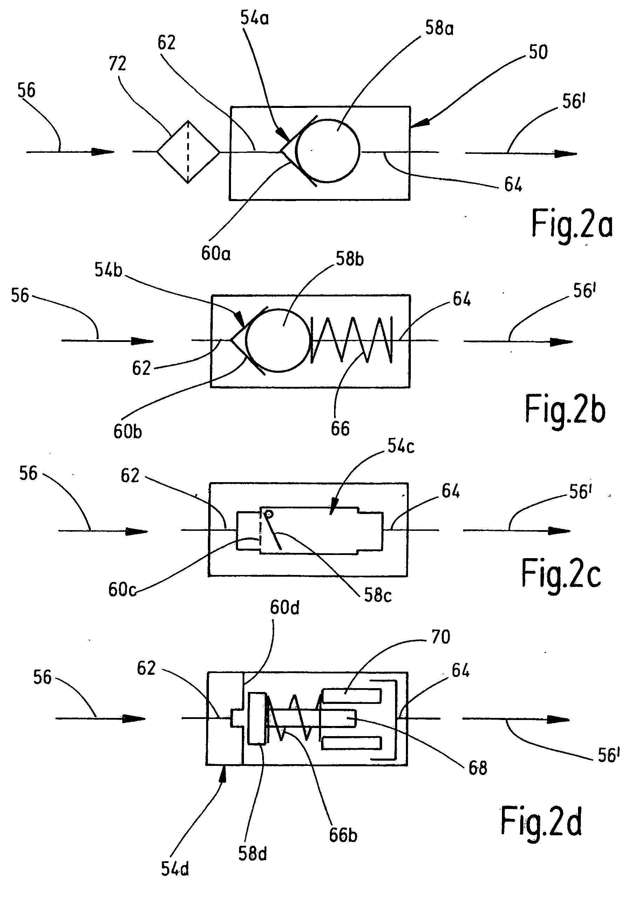

In den Fig. 2a, 2b, 2c und 2d sind verschiedene vereinfachte symbolhafte Darstellungen von Rückschlagventilen 54a, 54b, 54c, 54d gezeigt. Die Rückschlagventile 54 können grundsätzlich bei jedem der Sperrorgane 50, 52 zur Verwendung gelangen. Die Rückschlagventile 54 weisen eine definierte Durchflussrichtung auf, die durch mit 56, 56' bezeichnete Pfeile veranschaulicht wird. Die Durchflussrichtung 56, 56' soll mit einer Soll-Strömungsrichtung der Fluidpfade 28, 28' sowie 30a, 30a', 30b, 30b' übereinstimmen, die in Fig. 1 durch entsprechend bezeichnete Pfeile veranschaulicht ist. Entgegen der Durchlassrichtung 56, 56' erlauben die Rückschlagventile 54 regelmäßig keinen Durchtritt.

Das in Fig. 2a gezeigte Rückschlagventil 54a weist beispielhaft ein Sperrelement 58a sowie eine Gegenkontur 60a auf. Bei dem Sperrelement 58a kann es sich etwa um ein zumindest abschnittsweise kugelförmig gestaltetes Sperrelement 58a handeln. Damit einhergehend kann die Gegenkontur 60a einen korrespondierenden Sitz für das Sperrelement 58a aufweisen. Bei dem Rückschlagventil 54a kann es sich insbesondere um ein Kugelrückschlagventil handeln.

Jedes der Rückschlagventile 54 weist eine Eingangsseite 62 und eine Ausgangsseite 64 auf. Die Eingangsseite 62 bezeichnet diejenige Seite der Rückschlagventile 54, in die das Betriebsfluid beim Strömen entlang der Durchlassrichtung 56, 56' eingeleitet wird. Demgegenüber bezeichnet die Ausgangsseite 64 diejenige Seite der Rückschlagventile 54, aus der das Betriebsfluid beim Strömen entlang der Durchlassrichtung 56, 56' aus den Rückschlagventilen 54 austritt. Die Rückschlagventile sind dazu ausgestaltet, eine entgegengesetzte Strömung, bei der also ein Betriebsfluid entgegen der Durchlassrichtung 56, 56' die Rückschlagventile 54 ausgehend von der Ausgangsseite 64 in Richtung auf die Eingangsseite 62 durchströmen will, zu verhindern. Der bei einem solchen Fall auf der Ausgangsseite 64 anliegende Überdruck verlagert das Sperrelement 58 in Richtung auf die Gegenkontur 60 und verschließt somit das Rückschlagventil 54.

Fig. 2b zeigt eine abgewandelte Ausgestaltung eines Rückschlagventils, das mit 54b bezeichnet ist. In Ergänzung zu der in Fig. 2a gezeigten Ausgestaltung des Rückschlagventils 54a ist beim Rückschlagventil 54b ferner ein Spannelement 66 vorgesehen, das auch als Vorspannelement bezeichnet werden kann. Das Spannelement 66 ist dazu ausgestaltet, das Sperrelement 58b auch in einem drucklosen Zustand mit einer definierten Vorspannung in Richtung auf die Gegenkontur 60 zu beaufschlagen. Ein druckloser Zustand kann etwa dann gegeben sein, wenn zwischen der Eingangsseite 62 und der Ausgangsseite 64 kein oder nur ein unwesentlicher Druckunterschied herrscht. Eine durch das Spannelement 66 erzeugte Vorspannung kann die Betriebssicherheit des Rückschlagventils 58b erhöhen. Das Spannelement 66 kann etwa als Spannfeder ausgestaltet sein. Denkbar sind etwa mechanische Federn, insbesondere Metallfedern, ferner jedoch etwa auch fluidische Federn.

Fig. 2c zeigt eine weitere Abwandlung eines Rückschlagventils, das mit 54c bezeichnet ist. Das Rückschlagventil 54c ist als Klappenventil ausgestaltet. Das Sperrelement 58c kann durch eine Klappe gebildet sein, die etwa verschwenkbar oder verdrehbar aufgenommen ist. Das als Klappe ausgestaltete Sperrelement 58c kann eine korrespondierende Gegenkontur 60c abhängig von den Druckverhättnissen zwischen dem Eingang 62 und dem Ausgang 64 selektiv sperren oder freigeben.

Fig. 2d zeigt eine weitere alternative Ausgestaltung eines Rückschlagventils, das mit 54d bezeichnet ist. Das Rückschlagventil 54d ist als Tellerrückschlagvenfil oder Stößelrückschlagventil ausgestaltet. Ein zugehöriges Sperrelement 58d kann tellerförmig ausgestaltet sein und einen Stößel 68 aufweisen, der an einer Führung 70 im Rückschlagventil 54d verschiebbar aufgenommen ist. Ferner kann ein Spannelement 66b vorgesehen sein, das das Sperrelement 58d bereits im drucklosen Zustand mit einer Vorspannung in Richtung auf eine korrespondierende Gegenkontur 60d beaufschlagt

In Fig. 2a ist ferner ein mit 72 bezeichnetes Filterelement veranschaulicht. Das Filterelement 72 kann, bei Betrachtung entlang der Durchlassrichtung 56, 56', dem Sperrorgan 50 stromaufwärts vorgelagert sein. Bei dem Filterelement 72 kann es sich etwa um eine Filterkartusche oder um ein ähnlich gestaltetes Filterelement handeln. Das Filterelement 72 kann grundsätzlich jedem der anhand der Fig. 1 veranschaulichten Sperrorgane 50, 52 vorgelagert sein. Das Filterelement 72 kann die Sperrorgane 50, 52 vor übermäßiger Verschmutzung schützen und somit die Funktionssicherheit der Sperrorgane 50, 52, die insbesondere als Rückschlagventile oder dergleichen ausgestaltet sein können, gewährleisten. Filterelemente 72 für Kühlmittel oder Schmiermittel können allgemein etwa als KSS-Filter bezeichnet werden (Kühlschmierstoff-Filter).

Da das zumindest eine Sperrorgan 50, 52 regelmäßig bewegliche Komponenten umfasst, ist es von Vorteil, das Filterelement 72 derart auszulegen, dass Partikel, die groß genug sind, um das zumindest eine Sperrorgan 50, 52 zu blockieren, zumindest im Normalbetrieb entlang der Soll-Durchflussrichtung 56, 56' wirksam aus dem strömenden Fluid herausgefiltert werden. Es versteht sich, dass das Filterelement 72 grundsätzlich bei jeder der anhand der Fig. 2a, 2b, 2c und 2d veranschaulichten Ausgestaltungen der Sperrorgane 50, 52 zur Verwendung kommen kann.

Demgemäß kann es bei verschiedenen Ausgestaltungen besonders bevorzugt sein, wenn der Werkzeughalter gemäß den Prinzipien der vorliegenden Offenbarung mit zumindest einem Filterelement 72 versehen ist, das, in der Durchlassrichtung 56, 56' betrachtet, stromaufwärts des zumindest einen Sperrorgans 50, 52 angeordnet ist.

Insgesamt wird im Rahmen der Erfindung ein Werkzeughalter 12 angegeben, der aufgrund verschiedener Modifikationen, die mit geringem Aufwand realisierbar sind, eine stark erweiterte Funktionalität bereitstellen kann. Insbesondere ist der Werkzeughalter 12 für eine Mehrzahl von Konfigurationen einer spindelseitigen Zuführung eines Kühlmittels oder Schmiermittels ausgelegt und kann ohne manuellen Umrüstaufwand verwendet werden. Der Werkzeughalter 12 kann sich ohne weiteren Rüstaufwand automatisiert an eine gegebene Betriebsfluidzufuhrkonfiguration anpassen.

## Patentansprüche

1. Werkzeughalter, insbesondere Steilkegelschaft, mit zumindest einer Aufnahmefläche (18), insbesondere einem Aufnahmekonus (26), zur Aufnahme und Mitnahme durch eine Antriebsspindel (16), und mit zumindest zwei integrierten Fluidpfaden (28; 30a; 30b) für ein Betriebsfluid, wobei den Fluidpfaden (28; 30a; 30b) zumindest ein Sperrorgan (50, 52a, 52b) zugeordnet ist, das dazu ausgebildet ist, den Fluidpfad (28; 30a; 30b) richtungsabhängig zu sperren oder freizugeben,, **dadurch gekennzeichnet, dass** jedem Fluidpfad (28; 30a; 30b) zumindest ein Sperrorgan (50, 52a, 52b) zugeordnet ist, welches den Fluidpfad (28; 30a; 30b) druckabhängig sperrt oder freigibt.

2. Werkzeughalter (12) nach Anspruch 1, **dadurch gekennzeichnet, dass** die zumindest zwei Fluidpfade (28, 30a, 30b) zur Leitung desselben Betriebsfluids ausgebildet sind, und wobei es sich bei dem Betriebsfluid zumindest um ein Kühlmittel oder ein Schmiermittel handelt.

3. Werkzeughalter (12) nach einem der vorhergehenden Ansprüche, **dadurch gekennzeichnet, dass** das zumindest eine Sperrorgan (50, 52a, 52b) eine definierte Durchlassrichtung und eine definierte Sperrrichtung aufweist.

4. Werkzeughalter (12) nach einem der Ansprüche 2 bis 3, **dadurch gekennzeichnet, dass** die zumindest zwei Fluidpfade (28, 30a, 30b) mittelbar oder unmittelbar miteinander verbunden sind.

5. Werkzeughalter (12) nach einem der vorhergehenden Ansprüche, **dadurch gekennzeichnet, dass** das zumindest eine Sperrorgan (50, 52a, 52b) als Rückschlagventil ausgestaltet ist.

6. Werkzeughalter (12) nach Anspruch 5, **dadurch gekennzeichnet, dass** das zumindest eine Sperrorgan (50, 52a, 52b) ein Sperrelement (58) und eine Gegenkontur (60) aufweist, und wobei das zumindest eine Sperrorgan (50, 52a, 52b) vorzugsweise ein Spannelement (66) aufweist, das das Sperrelement (58) in Richtung auf eine Spannstellung beaufschlägt.

7. Werkzeughalter (12) nach einem der vorhergehenden Ansprüche, **dadurch gekennzeichnet, dass** jeder Fluidpfad (28, 30a, 30b) zumindest einen Strömungskanal (32, 34, 36) aufweist, der in den Werkzeughalter (12) eingebracht ist und der zumindest eine Einlassöffnung (33) oder eine Auslassöffnung (35) für das Betriebsfluid aufweist.

8. Werkzeughalter (12) nach einem der vorhergehenden Ansprüche, **dadurch gekennzeichnet, dass** ein erster Fluidpfad (28) zumindest einen zentralen Strömungskanal (32) aufweist, der insbesondere koaxial zu einer Längsachse (17) des Werkzeughalters (12) verläuft.

9. Werkzeughalter (12) nach einem der vorhergehenden Ansprüche, **dadurch gekennzeichnet, dass** ein zweiter Fluidpfad (30a; 30b) zumindest einen seitlichen Strömungskanal (34, 36) aufweist, der unter einem Winkel, insbesondere unter einem spitzen Winkel (α, β) zu einer Längsachse (17) des Werkzeughalters (12) verläuft.

10. Werkzeughalter (12) nach einem der vorhergehenden Ansprüche, **gekennzeichnet durch** einen Bund (40), wobei zumindest einer der Fluidpfade (30a, 30b) einen Strömungskanal (33) aufweist, der an einer Axialfläche (44) des Bunds (40) mündet.

11. Werkzeughalter (12) nach einem der vorhergehenden Ansprüche, **gekennzeichnet durch** zumindest eine Werkzeugaufnahmefläche (22), insbesondere eine Aufnahmetasche (20), zur Aufnahme eines Bearbeitungswerkzeugs (14), wobei die zumindest zwei integrierten Fluidpfade (28, 30a, 30b) vorzugsweise zumindest mittelbar oder unmittelbar in die Aufnahmetasche (20) münden, um das Betriebsfluid an das Bearbeitungswerkzeug (14) zu übergeben.

12. Werkzeuganordnung, aufweisend einen Werkzeughalter (12) nach einem der vorhergehenden Ansprüche und ein Bearbeitungswerkzeug (14), wobei der Werkzeughalter (12) zumindest einen selektiv aktivierbaren Fluidpfad (28; 30a; 30b) für ein Betriebsfluid bereitstellt, das dem Bearbeitungswerkzeug (14) über eine Spindel (16) zuführbar ist.

## Claims

1. A tool holder, in particular a steep-taper shank, comprising at least one mounting surface (18), in particular a mounting cone (26), for being received and driven by a drive spindle (16), and comprising at least one integrated fluid path (28; 30a; 30b) for an operating fluid, wherein at least one blocking member (50, 52a, 52b) is associated with the at least one fluid path (28; 30a; 30b), and wherein the at least one blocking member (50, 52a, 52b) is configured to block or release, depending on direction, the at least one fluid path (28; 30a; 30b), **characterized in that** at least one blocking member (50, 52a, 52b) is associated with each fluid path (28; 30a; 30b) for blocking or releasing the fluid path (28; 30a; 30b) depending on pressure.

2. The tool holder (12) according to claim 1, **characterized in that** the at least two fluid paths (28, 30a, 30b) are configured for feeding the same operating fluid, and wherein the operating fluid is at least a coolant or a lubricant.

3. The tool holder (12) according to any of the preceding claims, **characterized in that** the at least one blocking member (50, 52a, 52b) comprises a defined direction of throughput and a defined direction of blocking.

4. The tool holder (12) according to any of claims 2 to 3, **characterized in that** the at least two fluid paths (28, 30a, 30b) are connected to one another directly or indirectly.

5. The tool holder (12) according to any of the preceding claims, **characterized in that** the at least one blocking member (50, 52a, 52b) is arranged as a check valve.

6. The tool holder (12) as claimed in claim 5, **characterized in that** the at least one blocking member (50, 52a, 52b) comprises a blocking element (58) and a mating contour (60), wherein the at least one blocking member (50, 52a, 52b) preferably comprises a tensioning element (66) that urges the blocking element (58) towards a tensioning position.

7. The tool holder (12) according to any of the preceding claims, **characterized in that** each fluid path (28, 30a, 30b) comprises at least one flow channel (32, 34, 36), which is provided in the tool holder (12), wherein the at least one flow channel (32, 34, 36) comprises at least one of an inlet opening (33) or an outlet opening (35) for the operating fluid.

8. The tool holder (12) according to any of the preceding claims, **characterized in that** a first fluid path (28) comprises at least one central flow channel (32) which is arranged in particular coaxially with respect to a longitudinal axis (17) of the tool holder (12).

9. The tool holder (12) according to any of the preceding claims, **characterized in that** a second fluid path (30a; 30b) comprises at least one lateral flow channel (34, 36) that is arranged at an angle, in particular an acute angle (α, β), to a longitudinal axis (17) of the tool holder (12).

10. The tool holder (12) according to any of the preceding claims, further comprising a collar (40), **characterized in that** at least one of the fluid paths (30a, 30b) comprises a flow channel (33) that leads to an axial face (44) of the collar (40).

11. The tool holder (12) according to any of the preceding claims, further comprising at least one tool receiving surface (22), in particular a receiving recess (20), for receiving a machining tool (14).

12. A tool arrangement, comprising a tool holder (12) according to any of the preceding claims and a machine tool (14), **characterized in that** the tool holder (12) provides at least one selectively activatable fluid path (28; 30a; 30b) for an operating fluid, which may be supplied to the machining tool (14) by way of a spindle (16).

## Revendications

1. Support pour outil, en particulier arbre à cône aigu, présentant au moins une surface de reprise (18), en particulier un cône de reprise (26), pour la reprise et l'entraînement par une broche d'entraînement (16), et au moins deux parcours de fluide intégrés (28; 30a; 30b) pour un fluide de fonctionnement, un organe de blocage (50, 52a, 52b) étant associé aux parcours (28; 30a; 30b) de fluide et étant configuré pour bloquer ou libérer le parcours (28; 30a; 30b) de fluide en fonction de la direction,
**caractérisé en ce que**
au moins un organe de blocage (50, 52a, 52b) qui bloque ou libère le parcours (28; 30a; 30b) de fluide en fonction de la pression est associé à chaque parcours (28; 30a; 30b) de fluide.

2. Support (12) pour outil selon la revendication 1, **caractérisé en ce que** les deux ou plusieurs parcours (28, 30a, 30b) de fluide sont formés de manière à guider un même fluide de fonctionnement, le fluide de fonctionnement étant au moins un fluide de refroidissement ou un lubrifiant.

3. Support (12) pour outil selon l'une des revendications précédentes, **caractérisé en ce que** le ou les organes de blocage (50, 52a, 52b) présentent une direction définie de passage et une direction définie de blocage.

4. Support (12) pour outil selon l'une des revendications 2 et 3, **caractérisé en ce que** les deux ou plusieurs parcours (28, 30a, 30b) de fluide sont raccordés mutuellement de manière directe ou indirecte.

5. Support (12) pour outil selon l'une des revendications précédentes, **caractérisé en ce que** le ou les organes de blocage (50, 52a, 52b) sont configurés comme soupapes anti-retour.

6. Support (12) pour outil selon la revendication 5, **caractérisé en ce que** le ou les organes de blocage (50, 52a, 52b) présentent un élément de blocage (58) et un contour complémentaire (60), le ou les organes de blocage (50, 52a, 52b) présentant de préférence un élément de serrage (66) qui sollicite l'élément de blocage (58) en direction d'une position de serrage.

7. Support (12) pour outil selon l'une des revendications précédentes, **caractérisé en ce que** chaque parcours (28, 30a, 30b) de fluide présente au moins un canal d'écoulement (32, 34, 36) disposé dans le support (12) pour outil et présentant au moins une ouverture d'admission (33) ou une ouverture de sortie (35) pour le fluide de fonctionnement.

8. Support (12) pour outil selon l'une des revendications précédentes, **caractérisé en ce qu'**un premier parcours (28) de fluide présente au moins un canal central d'écoulement (32) qui s'étend en particulier coaxialement par rapport à l'axe longitudinal (17) du support (12) pour outil.

9. Support (12) pour outil selon l'une des revendications précédentes, **caractérisé en ce qu'**un deuxième parcours (30a; 30b) de fluide présente au moins un canal latéral d'écoulement (34, 36) qui forme un angle et en particulier en un angle aigu (α, β) par rapport à l'axe longitudinal (17) du support (12) pour outil.

10. Support (12) pour outil selon l'une des revendications précédentes, **caractérisé par** un collet (40), au moins l'un des parcours (30a, 30b) de fluide présentant un canal d'écoulement (33) qui débouche sur une surface axiale (44) du collet (40).

11. Support (12) pour outil selon l'une des revendications précédentes, **caractérisé par** au moins une surface (22) de reprise d'outil, en particulier une poche de reprise (20), qui reprend un outil de traitement (14), les deux ou plusieurs parcours (28, 30a, 30b) de fluide intégrés débouchant de préférence au moins indirectement ou directement dans la poche de reprise (20) pour transmettre le fluide de fonctionnement à l'outil de traitement (14).

12. Ensemble d'outil présentant un support (12) pour outil selon l'une des revendications précédentes et un outil de traitement (14), le support (12) pour outil présentant au moins un parcours (28; 30a; 30b) de fluide apte à être activé sélectivement, pour un fluide de fonctionnement qui peut être amené à l'outil de traitement (14) par l'intermédiaire d'une broche (16).
